# FASCICULE DE BREVET EUROPEEN

(11) **EP 1 402 805 B1**
(45) Date de publication et mention de la délivrance du brevet: **23.11.2005**
(21) Numéro de dépôt: 03292372.4
(22) Date de dépôt: 26.09.2003
(51) Int. Cl.: A47J 37/04

(54) **Dispositif de manipulation d'une broche à rôtir utilisée notamment dans un four de cuisson domestique**
Vorrichtung zur Manipulation eines Spiesses zur Verwendung insbesondere in einem Haushalts-Backofen
Device for the manipulation of a spit used in particular in a domestic cooking ofen

(30) Priorité: 27.09.2002 FR 0211998
(43) Date de publication de la demande: 31.03.2004
(73) Titulaire: Brandt Industries, 92500 Rueil Malmaison (FR)
(72) Inventeur: Maynard, Sylvain, 45000 Orleans (FR); Bourgeois, Georges, 45100 Orleans la Source (FR)
(74) Mandataire: Stankoff, Hélène

(56) Documents cités:
- FR-A- 2 740 841
- US-A- 3 691 937
- US-A- 5 649 475

## Description

La présente invention concerne un dispositif de manipulation d'une broche à rôtir adaptée à coopérer avec un tourne-broche.

Elle concerne également une broche à rôtir et un four de cuisson domestique équipé d'un tourne-broche.

Il est connu de prévoir dans un four de cuisson domestique l'utilisation d'un tourne-broche permettant de rôtir notamment des pièces de viande.

Une broche à rôtir est constituée principalement d'un axe destiné à être monté en rotation à l'intérieur de l'enceinte de cuisson du four, une des extrémités de cet axe venant en prise avec un moteur du tourne-broche.

La broche comporte généralement deux fourchettes, comprenant des dents adaptées à s'enfoncer dans une pièce de viande afin de maintenir celle-ci en position sur la broche.

Ces fourchettes sont montées en coulissement sur l'axe afin de s'adapter aux différentes dimensions des pièces de viande à rôtir.

Afin de maintenir en position ces fourchettes sur l'axe, des moyens de fixation tels des vis sont prévus pour maintenir en position les fourchettes sur l'axe.

Lors de l'utilisation d'une telle broche, la manipulation de celle-ci après cuisson est généralement mal aisée.

L'extraction de la broche à rôtir du four, puis le dévissage des vis de fixation associées à chaque fourchette de la broche nécessitent l'utilisation de différentes protections (gant, manique, torchon,...), afin d'éviter tout risque de brûlure avec l'axe de la broche ou encore les vis de fixation.

La présente invention a pour but de résoudre l'inconvénient précité et de proposer un dispositif de manipulation permettant de protéger l'utilisateur de tout risque de brûlure avec une broche à rôtir.

A cet effet, la présente invention vise un dispositif de manipulation d'une broche à rôtir adaptée à coopérer avec un tourne-broche, la broche étant constituée d'un axe et comprenant au moins une fourchette montée en coulissement sur l'axe et une vis de fixation adaptée à maintenir en position cette fourchette sur l'axe de la broche.

Le dispositif de manipulation a une forme de poignée allongée comprenant d'une part, à une première extrémité, des moyens de fixation détachable du dispositif à une extrémité de la broche, et d'autre part, à une seconde extrémité, des moyens de vissage et dévissage adaptés à coopérer avec la vis de fixation.

Ainsi, un même dispositif permet de manipuler la broche à son extrémité pour l'extraire de l'enceinte de cuisson, puis de dévisser les vis de fixation des fourchettes. Il n'est ainsi pas nécessaire d'utiliser un élément de protection supplémentaire pour dévisser les vis de fixation des fourchettes.

Selon une caractéristique préférée de l'invention, les moyens de vissage et dévissage comprennent au moins une empreinte adaptée à coopérer avec un piton de la vis de fixation.

Ainsi, les moyens de vissage et dévissage spécifiques, constitués d'une empreinte, sont prévus pour coopérer avec une vis de fixation ayant une tête en forme de piton, prévue pour être manipulée traditionnellement à la main.

Selon une autre caractéristique préférée de l'invention, les moyens de vissage et dévissage comprennent plusieurs empreintes identiques réparties autour d'un axe longitudinal du dispositif de manipulation.

Grâce à cette multiplicité des empreintes adaptées à coopérer avec une vis à piton, le positionnement du dispositif de manipulation est facilité dès lors que plusieurs positions sont rendues possibles autour de l'axe de celui-ci, pour permettre la coopération des moyens de vissage et dévissage avec la tête de vis.

La présente invention concerne également une broche à rôtir adaptée à coopérer avec un tourne-broche, comportant comme accessoire un dispositif de manipulation conforme à l'invention.

Enfin, la présente invention concerne un four de cuisson domestique équipé d'un tourne-broche, comportant comme accessoire une broche à rôtir conforme à l'invention.

L'utilisation d'une telle broche à rôtir et de ce four de cuisson présente des avantages analogues à ceux décrits précédemment, notamment en terme de sécurité de l'utilisateur vis-à-vis des risques de brûlure.

D'autres particularités et avantages de l'invention apparaîtront encore dans la description ci-après.

Aux dessins annexés, donnés à titre d'exemples non limitatifs :
- la figure 1 est une vue en perspective d'une broche à rôtir conforme à l'invention ;
- la figure 2 est une vue en perspective d'un dispositif de manipulation conforme à l'invention ; et
- la figure 3 est une vue en perspective illustrant la coopération d'un dispositif de manipulation avec une broche à rôtir conforme à l'invention.

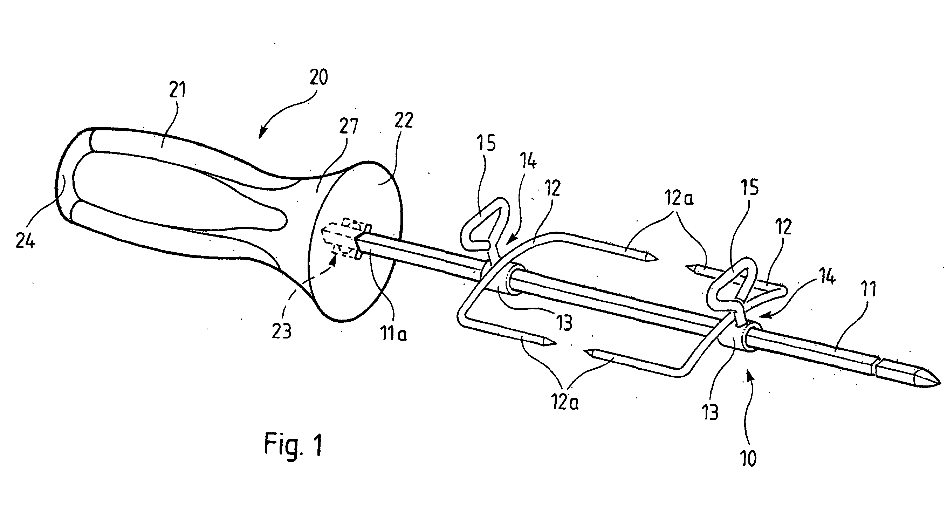

On va décrire tout d'abord en référence à la figure 1 une broche à rôtir conforme à un mode de réalisation de l'invention.

Cette broche à rôtir 10 est adaptée à coopérer avec un tourne-broche, et de manière classique avec un tourne-broche prévu dans un four de cuisson domestique.

Cette broche 10 est constituée d'un axe 11 sur lequel peut être embrochée une pièce de viande.

Ici, cet axe a une section transversale sensiblement rectangulaire afin d'éviter la rotation de la pièce à rôtir autour de cet axe.

La broche à rôtir 10 comporte également deux fourchettes 12 destinées à être montées en vis-à-vis sur l'axe 11 de la broche.

Ces fourchettes 12 ont une forme sensiblement de U de telle sorte qu'elles présentent chacune deux dents 12a destinées à s'enfoncer dans la pièce de viande pour maintenir celle-ci en position sur l'axe 11 de la broche.

Ces fourchettes 12 sont montées en coulissement sur l'axe 11 afin de permettre d'une part le passage de la viande à une extrémité de la broche 10, puis le réglage en position de ces fourchettes en fonction des dimensions de la pièce de viande à rôtir.

Pour réaliser ce montage en coulissement, chaque fourchette 12 est solidaire d'une pièce formant un manchon cylindrique 13 adapté à coulisser autour de l'axe 11 de la broche 10.

De préférence, ce manchon cylindrique 13 est fixé au niveau de la base de la forme en U de la fourchette 12.

Dans ce mode de réalisation, la fourchette 12 et le manchon cylindrique 13 sont en métal, solidarisés l'un à l'autre par soudage de la fourchette 12 sur une paroi extérieure du manchon cylindrique 13.

Une vis de fixation 14 est associée à chacune de ces fourchettes 12.

Cette vis de fixation 14 permet de maintenir en position la fourchette sur l'axe 11 de la broche 10.

A cet effet, chaque manchon cylindrique 13 comporte un trou fileté adapté à coopérer avec le pas de vis des vis de fixation 14, ces vis de fixation 14 venant en bout de course en contact avec l'axe 11. Cette position en contact forcé des vis permet de maintenir en position le manchon cylindrique 13 et les fourchettes 12 sur l'axe 11 de la broche.

Ces vis de fixation ont une tête en piton 15, constituée ici d'une forme triangulaire plane.

Conformément à l'invention, cette broche à rôtir 10 comporte comme accessoire un dispositif de manipulation 20.

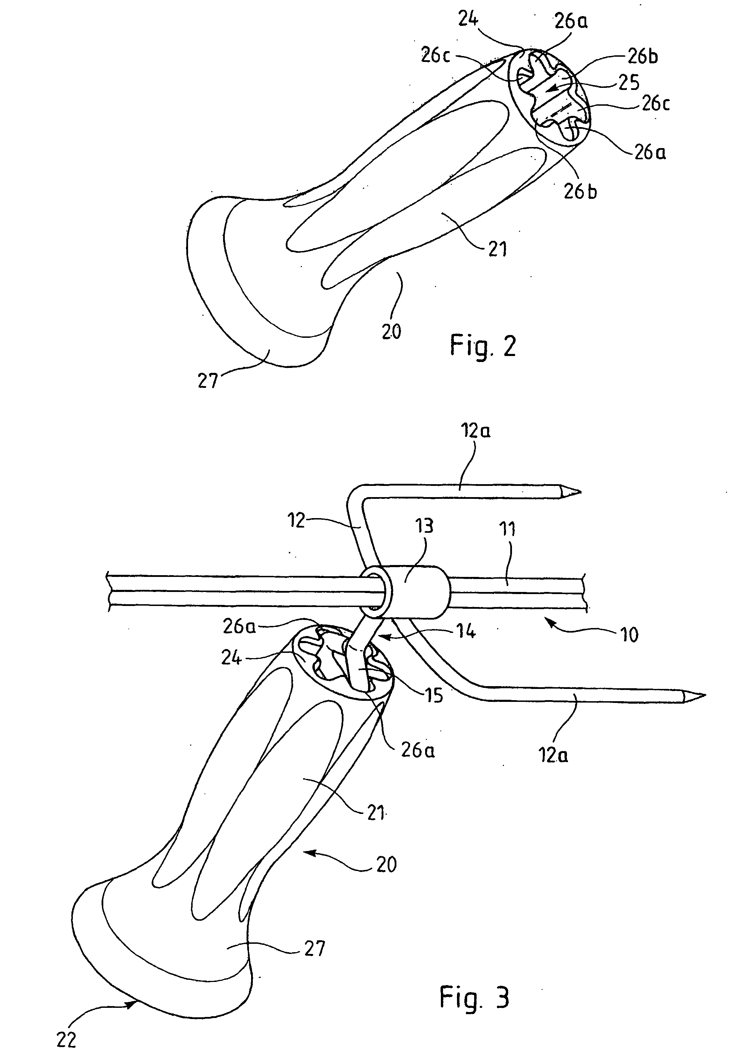

Ce dispositif de manipulation est illustré plus en détail à la figure 2.

Ce dispositif de manipulation 20 a une forme générale de poignée allongée.

Comme bien illustré à la figure 2, le dispositif de manipulation 20 a un corps 21 de forme sensiblement cylindrique, dont la longueur est prévue pour être facilement prise en main par un utilisateur.

Dans ce mode de réalisation, la portion cylindrique 21 comporte des découpes sur son pourtour afin d'offrir une meilleure prise en main du dispositif de manipulation 20.

Comme illustré sur la figure 1, une première extrémité 22 du dispositif de manipulation 20 comprend des moyens de fixation détachable 23 adaptés à fixer le dispositif de manipulation 20 sur une extrémité 11a de la broche 10.

Ici, ces moyens de fixation détachable 23 comprennent un alésage dont la forme est adaptée à s'emboîter en force sur l'extrémité 11a de la broche 10.

Ainsi, le dispositif de manipulation 20 peut être monté à l'extrémité 11a de la broche 10, notamment pour extraire celle-ci de l'enceinte de cuisson à la fin d'un cycle de rôtissage.

Le dispositif de manipulation 20 se trouve ainsi dans le prolongement de la broche 10.

Comme illustré à la figure 2, la seconde extrémité 24 du dispositif de manipulation, disposée à l'autre extrémité du corps cylindrique 21, comprend des moyens de vissage et dévissage 25 adaptés à coopérer avec les vis de fixation 14.

Dans ce mode de réalisation, ces moyens de vissage et dévissage 25 comprennent trois empreintes identiques 26a, 26b et 26c réparties autour de l'axe longitudinal du dispositif de manipulation 20.

Chacune de ces empreintes 26a, 26b et 26c a une forme ovale allongée dans un plan transversal du corps cylindrique 21, c'est-à-dire dans le plan terminal de l'extrémité 24 de ce dispositif 20. Ces trois empreintes sont ainsi disposées autour de l'axe longitudinal du dispositif 20, en forme d'étoile.

Les dimensions de ces empreintes 26a, 26b, 26c, tant dans le plan transversal du dispositif de manipulation 20 que dans sa hauteur, sont prévues pour permettre à chaque empreinte de coopérer avec le piton 15 formant la tête de chaque vis de fixation 14.

Chaque empreinte 26a, 26b, 26c a ainsi une longueur dans le plan transversal du corps cylindrique 21 correspondant à la base du piton triangulaire de la tête 15 des vis de fixation, et une profondeur dans la hauteur du corps cylindrique 21 correspondant à la hauteur du piton triangulaire de la tête 15 des vis de fixation 14.

Cette coopération est bien illustrée à la figure 4, dans laquelle la tête 15 est introduite à l'intérieur d'une empreinte 26a.

Grâce à cette disposition en étoile de plusieurs empreintes identiques sur la seconde extrémité 24 du dispositif de manipulation, l'orientation de ce dispositif de manipulation pour venir coopérer avec une tête 15 d'une vis 14 est facilitée, dès lors que plusieurs positions du dispositif de manipulation autour de son axe longitudinal sont rendues possibles.

Ici, grâce à la multiplicité des empreintes, au nombre de trois, et à la symétrie de chacune de ces empreintes 26a, 26b, 26c par rapport à un plan longitudinal transversal du dispositif de manipulation, six positions possibles du dispositif de manipulation sont prévues pour permettre la coopération de celui-ci avec une tête 15 d'une vis de fixation.

De préférence, ce dispositif de manipulation est réalisé par moulage dans un matériau plastique résistant à la chaleur.

A titre d'exemple, ce dispositif de manipulation peut être réalisé en polyamide chargé en fibres de verre (PA66) ou en un matériau thermodurcissable.

Afin de renforcer la protection à l'égard des brûlures, la forme sensiblement cylindrique du corps 21 du dispositif de manipulation se prolonge par une portion tronconique évasée 27 en direction de la première extrémité 22 de ce dispositif de manipulation 20.

Cette portion tronconique évasée 27 forme ainsi une garde à l'extrémité du dispositif de manipulation, utile notamment lorsque celui-ci est monté sur l'extrémité 11a de l'axe 11 de la broche 10.

Ce dispositif de manipulation permet ainsi d'extraire la broche 10 d'une enceinte de cuisson et de dévisser les vis 14, sans nécessiter d'utilisation de protection supplémentaire vis-à-vis de la chaleur.

Bien entendu, de nombreuses modifications peuvent être apportées à l'exemple de réalisation décrit ci-dessus sans sortir du cadre de l'invention.

En particulier, la broche 10 pourrait ne comporter qu'une seule fourchette 12. Cette fourchette 12 pourrait également avoir des formes différentes, et par exemple comporter trois dents réparties de manière régulière autour de l'axe 11 de la broche.

De même, la tête des vis de fixation pourrait être différente dès lors que les empreintes prévues sur le dispositif de manipulation sont prévues pour coopérer avec ses vis de fixation.

De même, le nombre d'empreintes prévues à l'extrémité 24 du dispositif de manipulation 20 peut être différent. En particulier, une seule empreinte peut être prévue, ou encore deux empreintes disposées en quadrature dans la face d'extrémité 24 du dispositif de manipulation 20. Un nombre supérieur à trois empreintes pourrait également être prévu.

Enfin, les moyens de fixation détachable 23 pourraient par exemple être constitués d'un taraudage adapté à coopérer avec un filetage prévu à l'extrémité 11 a de l'axe 11 de la broche.

## Revendications

1. Dispositif de manipulation d'une broche à rôtir (10) adaptée à coopérer avec un tourne-broche, ladite broche (10) étant constituée d'un axe (11) et comprenant au moins une fourchette (12) montée en coulissement sur ledit axe (11) et une vis de fixation (14) adaptée à maintenir en position ladite fourchette (12) sur l'axe (11) de la broche (10), **caractérisé en ce que** ledit dispositif de manipulation (20) a une forme de poignée allongée comprenant d'une part, à une première extrémité (22), des moyens de fixation détachable (23) dudit dispositif (20) à une extrémité (11a) de ladite broche (10), et d'autre part, à une seconde extrémité (24), des moyens de vissage et dévissage (25) adaptés à coopérer avec ladite vis de fixation (14).

2. Dispositif de manipulation conforme à la revendication 1, **caractérisé en ce que** les moyens de vissage et dévissage (25) comprennent au moins une empreinte (26a, 26b, 26c) adaptée à coopérer avec un piton (15) de ladite vis de fixation (14).

3. Dispositif de manipulation conforme à la revendication 2, **caractérisé en ce que** les moyens de vissage et dévissage (25) comprennent plusieurs empreintes (26a, 26b, 26c) identiques réparties autour d'un axe longitudinal du dispositif de manipulation (20).

4. Dispositif de manipulation conforme à l'une des revendications 1 à 3, **caractérisé en ce que** les moyens de fixation détachable (23) sont constitués d'un alésage adapté à s'emboîter en force sur une extrémité (11a) de ladite broche (10).

5. Dispositif de manipulation conforme à l'une des revendications 1 à 4, **caractérisé en ce qu'**il a une forme sensiblement cylindrique (21) prolongée par une portion tronconique évasée (27) en direction de ladite première (22) extrémité du dispositif de manipulation (20).

6. Broche à rôtir adaptée à coopérer avec un tourne-broche, **caractérisée en ce qu'**elle comporte comme accessoire un dispositif de manipulation (20) conforme à l'une des revendications 1 à 5.

7. Broche à rôtir conforme à la revendication 6, **caractérisée en ce qu'**elle comprend deux fourchettes (12) montées en vis-à-vis sur ledit axe (11) de broche (10) et deux vis de fixation (14) adaptées à maintenir en position respectivement lesdites fourchettes (12) sur l'axe (11) de la broche (10).

8. Four de cuisson domestique équipé d'un tourne-broche, **caractérisé en ce qu'**il comporte comme accessoire une broche à rôtir (10) conforme à l'une des revendications 6 ou 7.

## Patentansprüche

1. Vorrichtung zur Handhabung eines Bratspießes (10), die mit einem Spieß-Drehantrieb zusammenwirken kann, wobei der Spieß aus einer Achse (11) besteht und mindestens eine gleitend an der Achse (11) angebrachte Gabel und eine Befestigungsschraube (14) aufweist, die die Gabel (12) auf der Achse (11) des Spießes in Stellung halten kann, **dadurch gekennzeichnet, dass** die Handhabungsvorrichtung (20) die Form eines länglichen Griffs hat, der einerseits an einem ersten Ende (22) Befestigungsmittel aufweist, die an einem Ende (11a) des Spießes (10) von der Vorrichtung (20) abnehmbar sind, und andererseits an einem zweiten Ende (24) Los- und Festschraubmittel (25), die mit der Befestigungsschraube (14) zusammenwirken können.

2. Handhabungsvorrichtung nach Anspruch 1, **dadurch gekennzeichnet, dass** die Los- und Festschraubmittel (25) mindestens eine Vertiefung (26a, 26b, 26c) aufweisen, die mit einer Öse (15) der Befestigungsschraube (14) zusammenwirken kann.

3. Handhabungsvorrichtung nach Anspruch 2, **dadurch gekennzeichnet, dass** die Los- und Festschraubmittel (25) mehrere Vertiefungen (25a, 26b, 26c) aufweisen, die identisch und um eine Längsachse der Handhabungsvorrichtung (20) verteilt sind.

4. Handhabungsvorrichtung nach einem der Ansprüche 1 bis 3, **dadurch gekennzeichnet, dass** die abnehmbaren Befestigungsmittel (23) aus einer Bohrung bestehen, die mit Kraft auf einem Ende (11a) des Spießes (10) aufgesteckt werden kann.

5. Handhabungsvorrichtung nach einem der Ansprüche 1 bis 4, **dadurch gekennzeichnet, dass** sie eine im wesentlichen zylindrische Form (21) aufweist, die durch einen erweiteten kegelstumpfförmigen Abschnitt (27) in Richtung des ersten Endes (22) der Handhabungsvorrichtung verlängert ist.

6. Bratspieß, der mit einem Spieß-Drehantrieb zusammenwirken kann, **dadurch gekennzeichnet, dass** er als Zubehör eine Handhabungsvorrichtung (20) nach einem der Ansprüche 1 bis 5 aufweist.

7. Bratspieß nach Anspruch 6, **dadurch gekennzeichnet, dass** er zwei Gabeln (12), die auf der Achse (11) gegenüberliegend angebracht sind, und zwei Befestigungsschrauben (14) aufweist, die die Gabeln (12) jeweils auf der Achse (11) des Bratspießes (10) in Stellung halten können.

8. Haushaltsbackofen, der mit einem Drehspieß ausgestattet ist, **dadurch gekennzeichnet, dass** er als Zubehör einen Bratspieß (10) nach einem der Ansprüche 6 oder 7 aufweist.

## Claims

1. Device for manipulating a roasting spit (10) adapted to cooperate with a spit rotator, the said spit (10) consisting of a spindle (11) and comprising at least one fork (12) slidably mounted on the said spindle (11) and a fixing screw (14) adapted to hold the said fork (12) in position on the spindle (11) of the spit (10), **characterised in that** the said manipulation device (20) is in the form of a elongate handle comprising on the one hand, at a first end (22), means (23) for the detachable fixing of the said device (20) at one end (11a) of the said spit (10) and on the other hand, at a second end (24), screwing and unscrewing means (25) adapted to cooperate with the said fixing screw (14).

2. Manipulation device according to claim 1, **characterised in that** the screwing and unscrewing means (25) comprise at least one indentation (26a, 26b, 26c) adapted to cooperate with a protrusion (15) on the said fixing screw (14).

3. Manipulation device according to claim 2, **characterised in that** the screwing and unscrewing means (25) comprise several identical indentations (26a, 26b, 26c) distributed about a longitudinal axis of the manipulation device (20).

4. Manipulation device according to one of claims 1 to 3, **characterised in that** the detachable fixing means (23) consist of a bore adapted to force-fit on one end (11a) of the said spit (10).

5. Manipulation device according to one of claims 1 to 4, **characterised in that** it has a substantially cylindrical shape (21) extended by a frustoconical portion (27) splayed in the direction of the said first end (22) of the manipulation device (20).

6. Roasting spit adapted to cooperate with a spit rotator, **characterised in that** it comprises as an accessory a manipulation device (20) according to one of claims 1 to 5.

7. Roasting spit according to claim 6, **characterised in that** it comprises two forks (12) mounted facing each other on the said spindle (11) of the spit (10) and two fixing screws (14) adapted to hold the said forks (12) in position respectively on the spindle (11) of the spit (10).

8. Domestic cooking oven equipped with a spit rotator, **characterised in that** it comprises as an accessory a roasting spit (10) according to one of claims 6 or 7.
